# EUROPEAN PATENT SPECIFICATION

(11) **EP 3 688 325 B1**
(45) Date of publication and mention of the grant of the patent: **21.07.2021**
(21) Application number: 17772727.8
(22) Date of filing: 27.09.2017
(51) Int. Cl.: F16C 11/06, F16C 1/14

(54) **CABLE END FITTING ASSEMBLY**
KABELENDSTÜCKANORDNUNG
ENSEMBLE RACCORD D'EXTRÉMITÉ DE CÂBLE

(43) Date of publication of application: 05.08.2020
(73) Proprietor: KA Group AG, 8001 Zurich (CH)
(72) Inventor: CRETAN, Florin, 565 33 Mullsjoe (SE)
(74) Representative: Uexküll & Stolberg
(86) International application number: PCT/EP2017/074555
(87) International publication number: WO 2019/063077

(56) References cited:
- FR-A1- 2 733 285

## Description

The present invention relates to a cable end fitting assembly for connecting a cable to a ball pin, the cable end fitting comprising a terminal rod adapted to be connected to an end portion of a cable and a ball bearing adapted to receive a ball of a ball pin to form a ball joint, the cable end fitting further comprising a socket in the form of a bushing in which the ball bearing is accommodated; an elastic damper ring embracing the socket; and a cage ring embracing and holding the damper ring with the socket therein, which cage ring is connected to the terminal rod, wherein the damper ring is composed of two symmetrical longitudinal sectors symmetrically opposing each other in longitudinal direction of the terminal rod and two symmetrical lateral sectors symmetrically opposing each other in lateral direction perpendicular to the longitudinal direction, wherein the distribution of elastomeric material in the longitudinal sectors is not uniform and the amount of material compressed is increasing at larger displacements in longitudinal direction to provide increasing resistance force, wherein the damper ring is shaped such that in each of the two lateral sectors the damper ring contacts the socket in axial direction over the maximal axial extension of the damper ring, and such that, in a rest state when no force is exerted by the cage ring on the damper ring, each of the longitudinal sectors is in contact with the socket with a minimal axial extension surface and that the axial extension of damper material is increasing with increasing radial distance from the center of the damper ring from the minimal axial extension to the maximal axial extension of the damper ring such that from the beginning of any longitudinal displacement the more the socket is displaced towards the respective longitudinal sector the more damper material is compressed and the higher is the resistance force.

An example of another kind of cable end fitting assembly is disclosed in EP 2 278 178 A1. This cable end fitting assembly comprises a terminal rod for connection to an end portion of a cable and a ball bearing adapted to receive a ball of a ball pin. The ball bearing is received in a socket in the form of a bushing. An elastic damper ring is embracing the bushing, and a cage ring embracing and holding the damper ring with the bushing therein is mounting the afore-mentioned components and is connected to the terminal rod. The damper ring is composed of two symmetrical longitudinal sectors symmetrically opposing each other in longitudinal direction of the terminal rod, and of two symmetrical lateral sectors symmetrically opposing each other in lateral direction perpendicular to the longitudinal direction. The longitudinal and lateral sectors are substantially of equal angular extension of about 90° of the total periphery of the damper ring. In the longitudinal sectors a recess is formed in the outer wall of the damper ring, and a further inner recess is formed within the damper ring body, which inner recess has the shape of a quarter of a circular ring. Due to the recesses of the longitudinal sectors deformation of the longitudinal sector in an initial phase is more pronounced and requires less force because the longitudinal damper ring sector is initially deformed such that the space of the recesses mentioned is reduced and eventually closed, i.e. there is very little deformation of damper material in the initial phase. After the initial phase with low resistance force the recesses are closed and further displacement of the socket within the cage ring is only possible by compressing the remaining damper material which leads to an increased resistance force at larger displacements.

There are several aspects concerning the design of the damper ring in view of a desired feeling or haptic response the driver should experience when actuating a lever that is connected by the cable end fitting assembly to a component to be actuated. In the following the component to be actuated will be referred to as a gear shift system as an example.

A first important feature to achieve is to allow relatively large displacements between the cage ring and the socket holding the ball bearing while the gear shift system is inactive (e.g. while in a gear) . This allows the damper ring to absorb strong or large amplitude vibrations. A second important feature to achieve is to avoid large displacements when the gear shift system is active (i.e. when the driver turns the shift lever). Large displacements in this phase would be experienced as a "spongy" transmission.

On the other hand it is desired that after a displacement of the socket within the cage ring occurred that the socket smoothly returns to the original state without driver assistance (i.e. with zero force from the driver), wherein this return movement should be a smooth movement and not be a sharp or jumping movement which would result from a large return force. Nevertheless, the return force should be high enough to achieve a smooth return from displacements as large as 1.6 mm without driver assistance. This feature or function of the damper ring is also referred to as self-centering function.

The above aspects are addressed by the cable end fitting assembly which is disclosed in FR 2 733 285 A1 and which comprises the features of the preamble of claim 1.

The damper ring of this prior art is shaped such that in each of the two lateral sectors the damper ring is in abutment against the socket in axial direction over the maximal axial extension of the damper ring. In this manner, the lateral sector establishes a large contact area with the socket held in between the two opposing lateral sectors. In this manner the two opposite lateral sectors are engaging the socket and provide a major contribution to the self-centering function when the bushing has to return after a displacement without driver assistance by elastically releasing the deformation in the lateral sectors caused by the displacement. The term displacement is used herein to describe the displacement distance by which the socket is displaced relative to the cage ring by compression of the damper ring compared to a rest state in which no force is transmitted between socket and cage ring and in which the damper ring and socket are centered in the cage ring.

Each of the two longitudinal sectors is shaped such that, in the rest state, the axial extension of damper material is increasing with increasing radial distance from the center of the damper ring from a minimal axial extension to a maximal axial extension of the damper ring The minimal axial extension surface of the longitudinal sector is facing the socket and is in contact with the socket. Due to the increasing axial extension of the longitudinal sector more and more damper material is involved in the compression when the socket is further displaced thereby compressing more and more damper material in the longitudinal sector towards which it is displaced. Due to this design of the longitudinal sectors the resistance force or stiffness is increasing the higher the force is that is exerted by the driver and that is transmitted through the cable and fitting assembly.

On the other hand the two opposing lateral sectors of the damper ring are in contact with the socket over the entire axial extension of the damper ring, and in this manner the two opposite lateral sectors hold the socket embraced in-between them. The opposite lateral sectors have the shape of cylindrical sectors and provide for an elastic bias force returning the socket to its rest position centered within the damper ring and the cage ring after any displacement. In this manner the two lateral sectors of the damper ring contribute to a large extend to the return force after a displacement of the socket within the cage ring occurred such that the socket smoothly returns to the original rest state without driver assistance.

It is an object of the present invention to improve the performance of a cable end fitting assembly in terms of smooth return or self-centering function.

This object is achieved by the cable end fitting assembly comprising the features of claim 1. Preferred embodiments are set out in the dependent claims.

According to the present invention each of the lateral sectors comprises a groove in its inner wall facing the socket, which lateral groove extends in a direction parallel to the axial direction of the damper ring and which divides each lateral sector in longitudinal direction in a forward in a rearward portion.

In a preferred embodiment each of the lateral sectors is configured with its inner walls of the forward and rearward portions thereof to have an inner radius to the center of the damper ring that is smaller than the radius of the outer wall of the socket such that the forward and rearward portions of each lateral sectors are in a compressed state when the bushing is in a mounted state in the damper ring. This results in an increased return force upon displacements of the socket and ensures a smooth self-centering after any displacement of the socket in the cage ring as a result of force having been exerted on the cable end fitting assembly.

In a preferred embodiment in each connecting area of adjacent longitudinal and lateral sectors of the damper ring a groove is formed in the inner wall of the damper ring, which grooves extend parallel to the axial direction of the damper ring over the entire axial extension thereof.

In a preferred embodiment the inner wall of the cage ring is provided with projections arranged to extend into openings in the damper ring, which projections are arranged and dimensioned to act as stoppers to act as stoppers to limit the displacement of the socket with respect to the cage ring upon compression of the damper ring to a predetermined maximal displacement.

In a preferred embodiment the inner wall of the cage ring is provided with four projections arranged to extend into the grooves through openings in the adjoining regions of the adjacent lateral longitudinal sectors of the damper ring, which projections are arranged and dimensioned to act as the stoppers to limit the displacement of the socket to a predetermined maximal displacement.

In a preferred embodiment the socket is at one of its ends closed by a cover having a radially outwardly extending peripheral flange, and the socket is at its opposite end provided with the radially outwardly extending peripheral flange. These two flanges are adapted to cover the gap between the socket and the cage ring to prevent, upon displacement of the socket 10 in longitudinal direction with respect to the damper ring, that compressed damper material is displaced from the gap between the socket and the cage ring.

In a preferred embodiment each longitudinal sector has, in cross-section taking at a plane perpendicular to the lateral direction, a wedge-shaped portion widening from the minimal axial extension to the maximal axial extension of the damper ring.

In a preferred embodiment the elastomeric material and shape of the damper ring are arranged such that the force versus displacement curve of the socket has a low slope first portion for small displacements, but provides sufficient return force of at least 80 N on return for displacements larger than 1.6 mm without driver assistance to be self-centering. The main contribution for this return force and self-centering feature is delivered by the lateral sectors of the damper ring.

In a preferred embodiment the elastomeric material and the shape of the damper ring are arranged such that, when force is applied on the cage ring, the slope of the force versus displacement curve is increasing to reach at least 140 N at displacements in the range between 1.8 and 2.1 mm corresponding to a stiffness between 0.013 mm/N and 0.015 mm/N. This provides sufficient stiffness (in case of the cable end fitting assembly acting on a transmission) during the synchronization phase when the driver exerts force that is transmitted through the cable end fitting. This stiffness provides a resistance feeling for the driver and prevents that the transmission of the force from a shifter and through the cable end fitting is experienced as spongy or imprecise.

In a preferred embodiment the elastomeric material and the shape of the damper ring are arranged such that the slope of the force versus displacement curve is, when force is apply from the cage ring through the damper ring and the socket, further increasing in a third portion following the second portion to reach a stiffness of about 0.003 mm/N in the force interval between 140 N and 300 N.

In a preferred embodiment the elastomeric material and the shape of the damper ring are arranged such that the maximal resistance force of about 300 N is reached at the maximal displacement of the socket determined by the projections of the cage ring limiting the displacement of the socket to the predetermined maximal displacement.

In a preferred embodiment the projections of the cage ring are arranged such that the predetermined maximal displacement of the bushing is 2.6 mm.

The invention will be described in the following with reference to an embodiment shown in the drawings in which:
Fig. 1 shows an exploded view of the cable end fitting assembly;
Fig. 2 shows a plan view of the damper ring of the cable end fitting assembly from above;
Fig. 3 shows a first side view of the damper ring of Fig. 2;
Fig. 4 shows a second side view of the damper ring of Fig. 2, wherein the damper ring is rotated by 90° around its central axis;
Fig. 5 and Fig. 6 show various perspective views of the damper ring of Figs. 2 to 4;
Fig. 7 shows a plan view of the damper ring of Figs. 2 to 6 from above and two cross-sectional views thereof;
Fig. 8 shows a side view and a cross-sectional view of the damper ring of Figs. 2 to 7;
Fig. 9 shows a side view of the cable end fitting assembly as well as two cross-sectional views thereof;
Fig. 10 shows a side view of the cable end fitting assembly and a cross-sectional view in plane G-G, wherein some of the components of the assembly have been omitted to simplify the graphical representation;
Fig. 11 shows a plan view of the cable end fitting assembly from above and a cross-sectional view thereof;
Fig. 12 shows a plan view of the cable end fitting assembly from above and two cross-sectional views in planes K-K and H-H, wherein again some components of the assembly have been omitted to simplify the graphical representation;
Fig. 13 shows a plan view and two perspective views of a cage ring and an attached terminal rod of the cable end fitting assembly shown in Figs. 1 to 12;
Figs. 14 to 19 show schematical cross-sectional views of subsequent movement states when an increasing force is transmitted in longitudinal direction of the terminal rod 2 to a ball pin received in a ball bearing of the cable end fitting assembly; and
Fig. 20 shows a force versus displacement graph showing the force exerted on the cable end fitting assembly versus the displacement of the socket with respect to the cage ring of the cable end fitting assembly if force is transmitted in longitudinal direction of the terminal rod of the assembly.

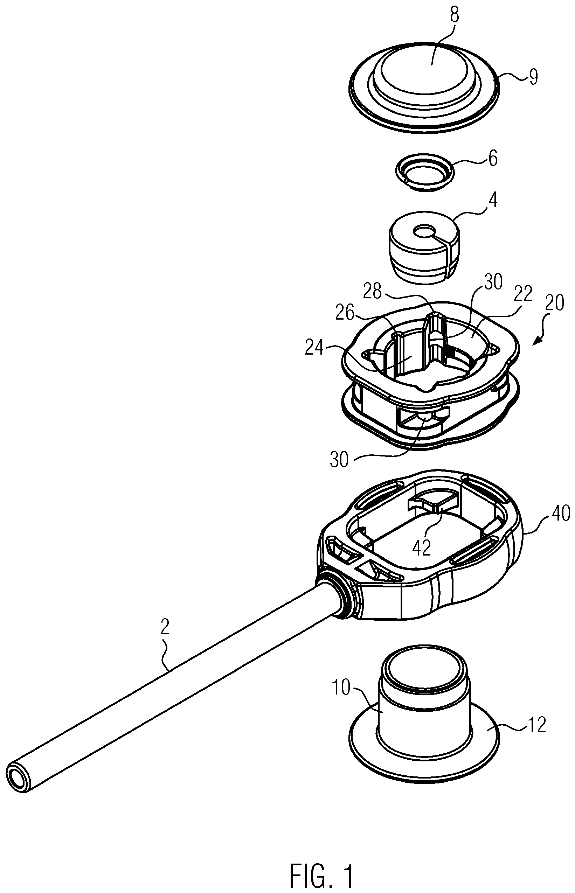

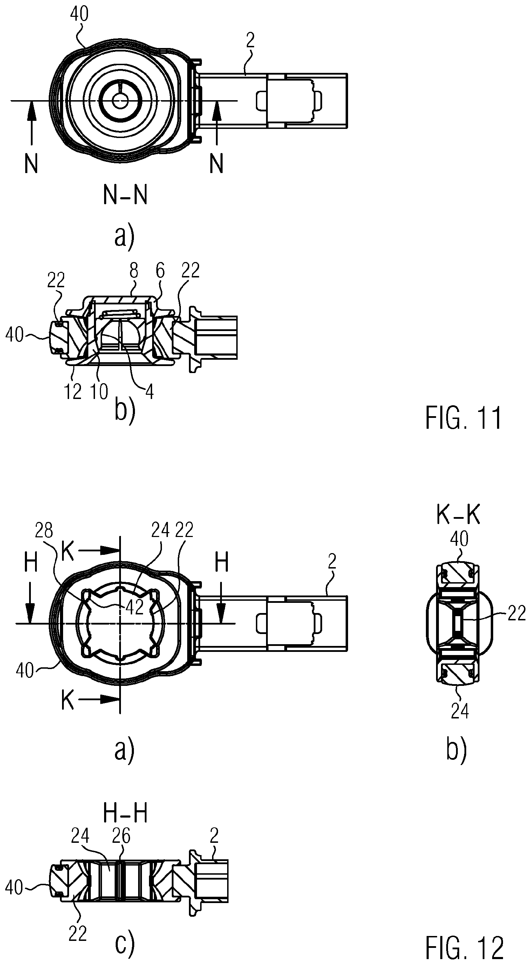

Fig. 1 shows an exploded view of the major components of the cable end fitting assembly which will now be described to give a first overview. The cable end fitting assembly serves to connect a cable to a ball pin (not shown) to exert force on the ball pin by exerting force on the cable. The ball of the ball pin (not shown) is received in a ball bearing 4, and the ball bearing 4 is received (see also Fig. 11b)) in a socket 10 which is essentially a bushing having a open first end and an opposite second end closed by a cover 8. The socket 10 is surrounded and embraced by a damper ring 20 of elastomeric material. The damper ring 20 in turn is held by a cage ring 40 which is made of solid material such as hard plastics or metal. The cage ring 40 is connected to a terminal rod 2 which is adapted to retain a cable end portion received therein. The cable, which is not shown in Fig. 1, is connected to an actuating lever which is moveable by the driver to control a device in the motor vehicle, for example a transmission.

The main purpose of the damper ring 20 is to provide an elastic suspension for the socket in the cage ring to absorb vibrations and reduce noise which would be created if the hard material components socket and cage ring would be in direct contact with each other.

Between cover 8 and ball bearing 4 a spring 6 is acting to urge the ball bearing 4 towards the receiving opening of the socket 10. As can be seen for example in Fig. 11b), the inner wall of the socket 10 has in the region adjoining its receiving opening an inwardly turning or tapering inner wall portion. The ball bearing 4 also has an inwardly turning inner wall portion in the region adjoining its receiving opening so that the ball bearing 4 is supported in this inwardly turned wall portion by the inwardly turned inner wall portion of the socket 10 when the ball bearing 4 is urged to this position by the spring 6. In this position a ball of a ball pin received in the ball bearing is safely retained therein. If the ball bearing 4 is urged against the action of spring 6 towards the cover 8 the wall portion adjoining its receiving opening is lifted off the inwardly turned inner wall portion of the socket 10. When the ball bearing is no longer supported around its receiving opening its elastic wall around its receiving opening may be bent outwardly to allow to remove the ball from the ball bearing or to introduce the ball into the ball bearing.

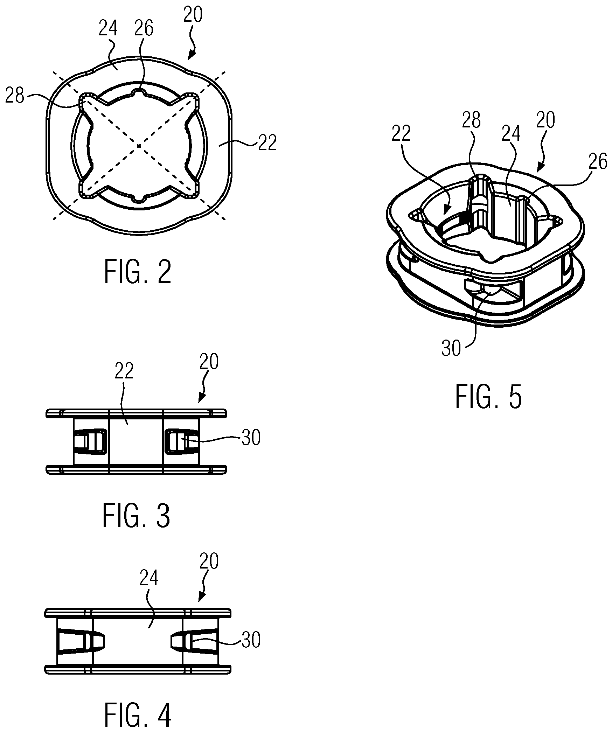

The design of the damper ring will now be described in more detail with reference to Figs. 1 to 8. As can be seen in Fig. 2, the damper ring is composed of two opposite symmetric longitudinal sectors 22 and two symmetrical opposite lateral sectors 24 (only one of the longitudinal and lateral sectors is provided with a reference numeral in Fig. 2). The lines dividing the damper ring 20 into longitudinal and lateral sectors 22, 24 are indicated by dashed lines in Fig. 2. It should be noted that the dashed lines in Fig. 2 do not correspond to any physical structure but are merely intended to illustrate how the damper ring 20 is composed of opposite longitudinal and lateral sectors 22 and 24.

The term longitudinal here refers to the longitudinal direction of the terminal rod 2, which longitudinal direction is the direction of the force that is transmitted via the cable through the cable end fitting assembly to the ball pin to be operated.

Each pair of adjacent longitudinal and lateral sectors 22 and 24 is provided with a groove 28 formed in the adjacent border regions of the longitudinal and lateral sectors 22 and 24. The four grooves 28 extend in a direction parallel to the axial direction of the damper ring 20, wherein the axis of the damper ring 20 extends symmetrically in the center of the damper ring and perpendicular to the planes defined by the two opposite end openings of the damper ring.

The damper ring has, as shown for example in Figs. 3 and 4, two opposite peripheral flanges projecting in radial direction beyond the central damper ring body. The internal wall structure of the damper ring in the longitudinal and lateral sectors 22 and 24 will now be described with reference to Figs. 2, 5 and 6. Each of the two opposite lateral sectors 24 has a shape such that the inner wall forms a cylinder segment between two grooves 28 adjoining the lateral sector 24. This cylindrical sector portion of the lateral sector 24 is divided by a lateral groove 26 which extends parallel to the axial direction of the damper ring and which divides the cylindrical sector portion of the lateral sector 24 in longitudinal direction into a forward and a rearward portion. The forward and rearward portions of each lateral sector 24 extend in axial direction over the entire axial extension of the damper ring (except for rounded or blunted upper and lower edges of the axial surfaces of the lateral sectors). Therefore, the two opposite lateral sectors 24 abut against the socket 10 with a large contact area, and thus a substantial portion of the damper material in the lateral sectors is deformed in case of any displacement of the socket 10. The two lateral sectors 24 designed in this manner provide the major contribution for the elastic return force when the socket engaged by the opposite lateral sectors has been displaced in longitudinal direction with respect to the cage ring due to force being transmitted through the cable end fitting assembly.

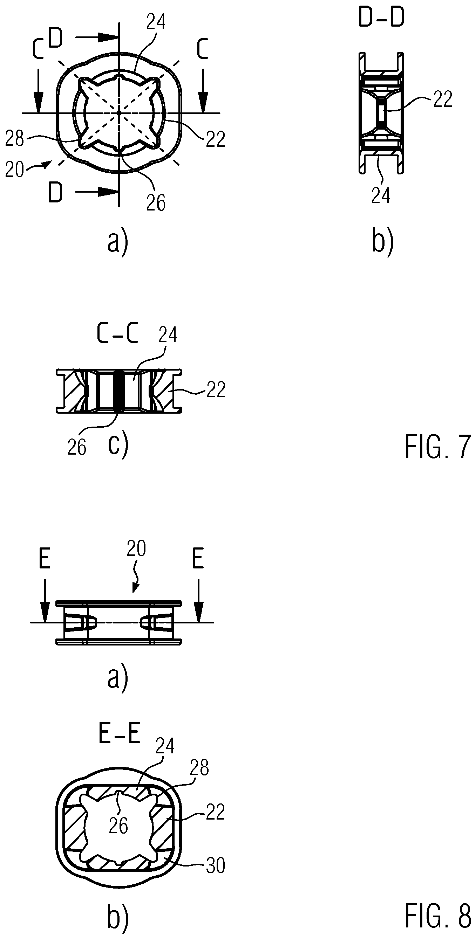

The lateral sectors 24 present large contact surfaces and extend over the entire axial extension of the damper ring 20. This can be seen for example in the cross-sectional view of Fig. 7b) which shows a cross-section taken at plane D-D of Fig. 7a) in the region of the lateral grooves 26. The lateral sectors 24 have, except for the areas of grooves 26, 28, a uniform thickness in radial direction.

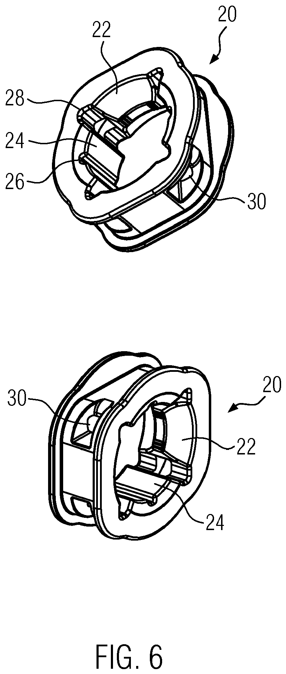

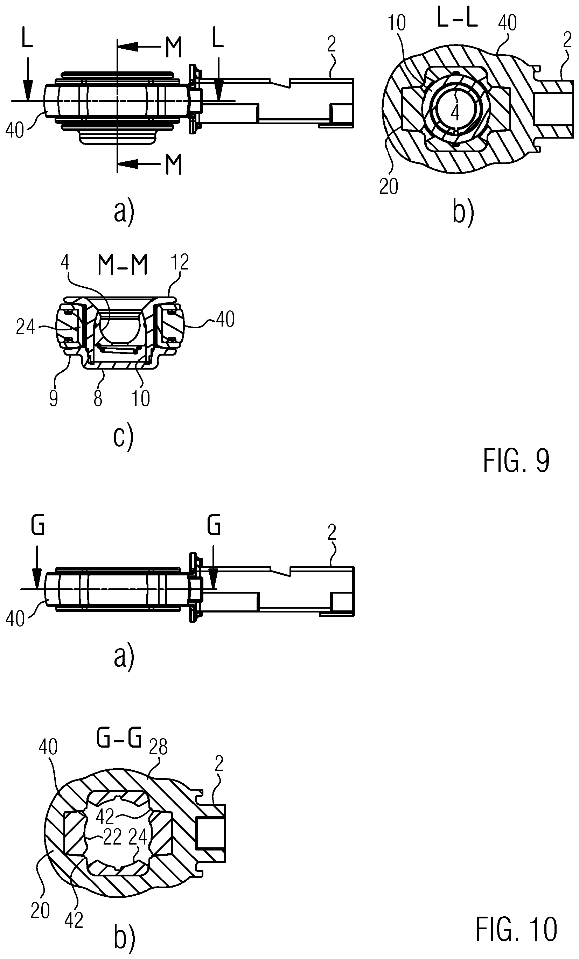

In contrast, the longitudinal sectors 22 do not have the configuration of cylindrical wall sectors but are tapering, towards the center of the damper ring, from a maximal axial extension to a minimal axial extension, as can for example be seen in the cross-section of Fig. 7c) taken at plane C-C of Fig. 7a) as well as in perspective views of Figs. 5 and 6. The inner wall surface with the minimal axial extension of the longitudinal sectors 22 has the shape of a stripe of cylindrical inner wall sector which is apparent from the cross-sectional views of Fig. 8b) and Fig. 10b), except in the lateral border regions thereof where the adjoining grooves 28 start. This inner wall surface of the longitudinal sectors is, with its minimal axial extension, in contact with the socket 10, as is shown in the cross-sectional view of Fig. 11b). In this cross-sectional view the longitudinal sectors 22 have the shape of a blunted wedge, with the blunted apex of the wedge being in contract with the socket 10 suspended by the damper ring 20 in the cage ring 40.

In the embodiment shown the axial extension of the damper ring in the longitudinal sectors 22 increases more than linearly towards larger radii. The cross-sectional views as in Fig. 11b) and Fig. 12c) also show that in the outer region of the longitudinal sectors 22 there is, following the tapering portion towards the maximal axial extension, a portion of damper material with full axial extension extending up to the outer periphery of the damper ring longitudinal sector 22.

This configuration of the longitudinal sectors 22 is designed to determine the force versus displacement behavior of the cable end fitting assembly, i.e. the displacement of the socket 10 from the center of the cage ring 40 as a function of the force transmitted through the cable end fitting assembly. Due to the, in cross-sectional view as in Figs. 11b) and 12c), tapering portion of the longitudinal sector 22, a relatively small amount of damper material is compressed in the initial phase of the displacement of the displacement of the socket 10, and consequently a relatively small resistance or counter-force is created by the longitudinal sector 22 at small displacements. With increasing displacement of the socket 10 towards one of the longitudinal sectors 22 more and more damper material of the tapering portion of the longitudinal sector 22 needs to be compressed and more and more resistance or counter-force is created by the compressed damper material in the longitudinal sector 22. In short, after a relatively low counter-force by the longitudinal sector 22 in a first initial phase of force application and resulting displacement of the socket, an increasing resistance force or stiffness is created in a second phase of force application or displacement of the socket 10 by compression of more and more damper material in the tapering portion of the longitudinal sector 22. Eventually when the damper material in the outer portion of the longitudinal sector 22 with maximal axial extension becomes involved and compressed, the force versus displacement relationship reaches a high slope third phase which is experienced by the driver as a high stiffness in the force transmission in response to a high force exerted on the cable end fitting assembly.

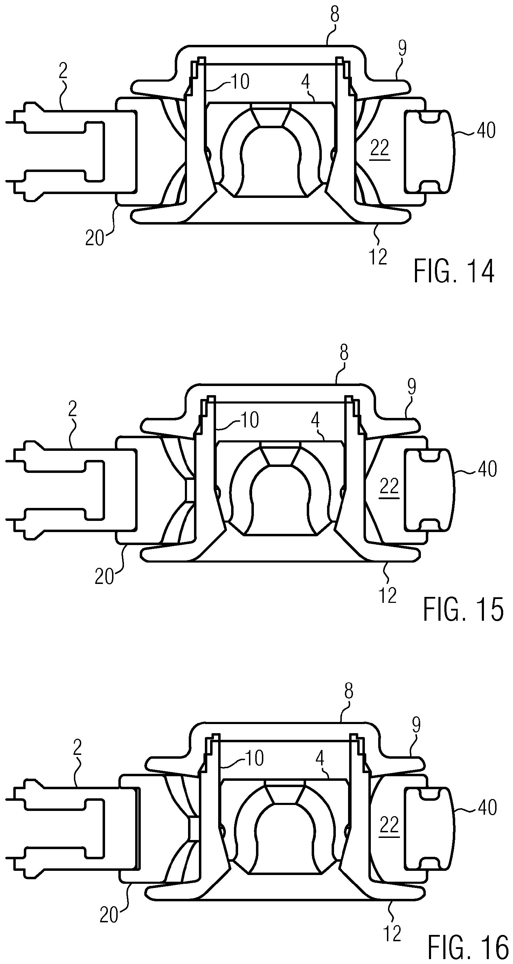

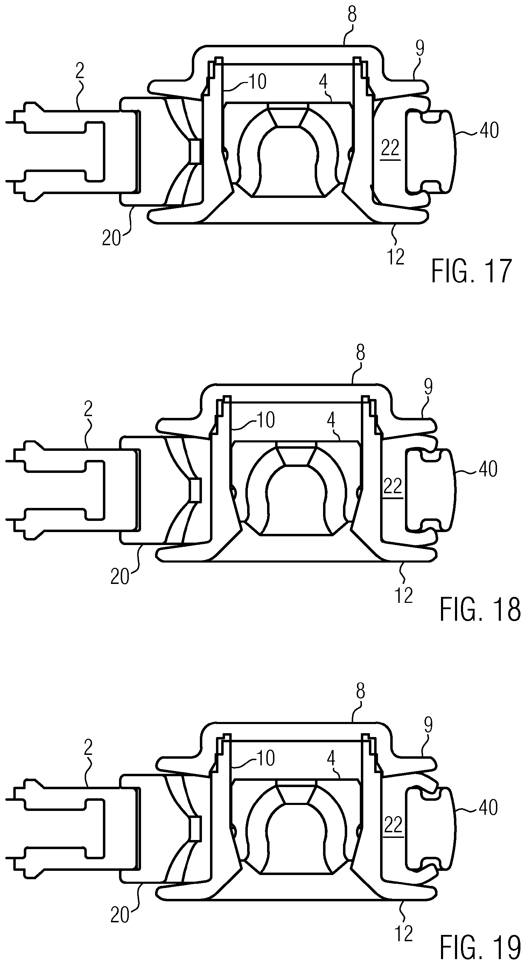

The above described dynamical behavior of the longitudinal sector 22 as a function of increasing force transmission through the cable end fitting assembly is illustrated in the sequence of schematical cross-sectional views shown in Figs. 14 to 19. In Fig. 14 the assembly is in the unloaded rest state with the socket 10 suspended by the damper ring 20 in the central or neutral rest position centered in the cage ring 40. When the cable (not shown) is pulled a corresponding force is exerted on the terminal rod 2 and the cage ring 40 and the longitudinal sector 22 on the right hand side of Fig. 15 starts to be compressed in the area of minimal axial extension, i.e. at the central stripe of the tapering inner portion of the longitudinal sector 22 in contact with the socket 10. At the same time the socket 10 looses contact with the longitudinal sector on the left hand side in Fig. 15. With higher force exerted on terminal rod 2 the socket 10 gets more and more displaced within cage ring 40 by compressing the longitudinal sector 22 on the right hand side, wherein more and more damper material of the tapering portion of the longitudinal sector 22 on the right hand side becomes involved and creates an increasingly strong resistance or counter-force. In the state of Fig. 17 the tapering portion of the longitudinal sector 22 on the right hand side is almost entirely compressed. During the displacement states in Figs. 15 to 17 the resistance or counter force gets increasingly stronger due to the increasing amount of compressed damper material.

In the state of Fig. 18 the tapering portion of the longitudinal sector 22 on the right hand side is entirely compressed, and for any further compression the damper material in the entire axial extension of the damper ring in the longitudinal sector 22 has to be compressed which results in a high slope force versus displacement relationship at high force transmission and consequently large displacements of the socket within the cage ring 40.

To avoid that damper material of the longitudinal sector 22 is to any significant extent displaced from the gap between the socket 10 and the cage ring 40 the socket 10 is provided with an outwardly extending peripheral flange 12 projection over the gap between socket 10 and cage ring 40. On the opposite end the gap is covered by a peripheral flange 9 of cover 8 extending over the gap between socket 10 and cage ring 40. As a consequence it is ensured that the majority of the damper material of the longitudinal sector 22 takes part in the compression and provides the high counter- or resistance force at high force transmission through the cable end fitting assembly which is experienced as high stiffness in the transmission by the driver when applying high forces.

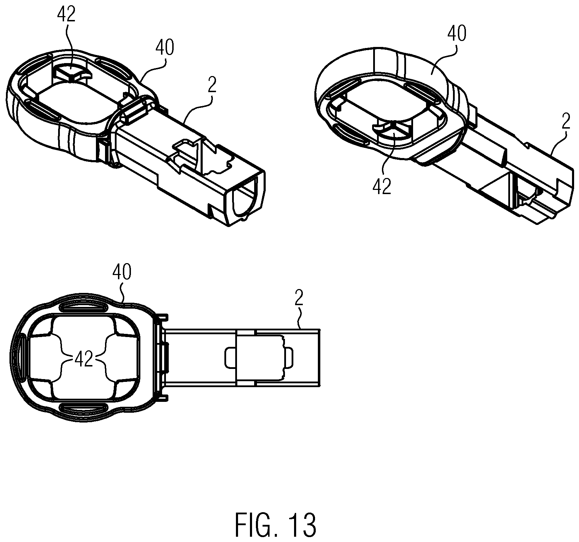

Whereas force transmission and resulting displacement of the socket is intended to provide a certain increasing stiffness at high force transmission as described, it is also preferred to limit the displacement at a predetermined distance so that the socket cannot be displaced further as in the state shown in Fig. 19. Since the damper material in the compressed longitudinal sector 22 in Fig. 19 could in principle be compressed further additional measures have to be taken. For this purpose the inner wall of the cage ring 40 is provided with projections 42, as can be best seen in Fig. 13. As can be seen in Fig. 13 the inner wall of the cage ring 40 has an rectangular shape with rounded corners, wherein the for projections 42 are positioned in the rounded corners. At positions corresponding to the projections 42 the damper ring 20 comprises openings 30 which extend through the damper ring and open into the grooves 28 in the inner wall of damper ring 20. These openings 30 are for example shown in Figs. 3 to 6. The projections 42 of cage ring 40 project into the openings 30 of the damper ring 20 such that they project into the grooves 28. This can for example be seen in the cross-sectional view of Fig. 10b) which is a cross-section taken at plane G-G of Fig. 10a) at the level of the projections 42. In the cross-sectional view of Fig. 10b) the projections 42 are shown to extend into the grooves 28. The projections 42 are dimensioned such that after a predetermined maximal displacement of the socket further displacement is limited by the projections 42 which act as stoppers when the socket 10 comes into abutment on two of the projections 42.

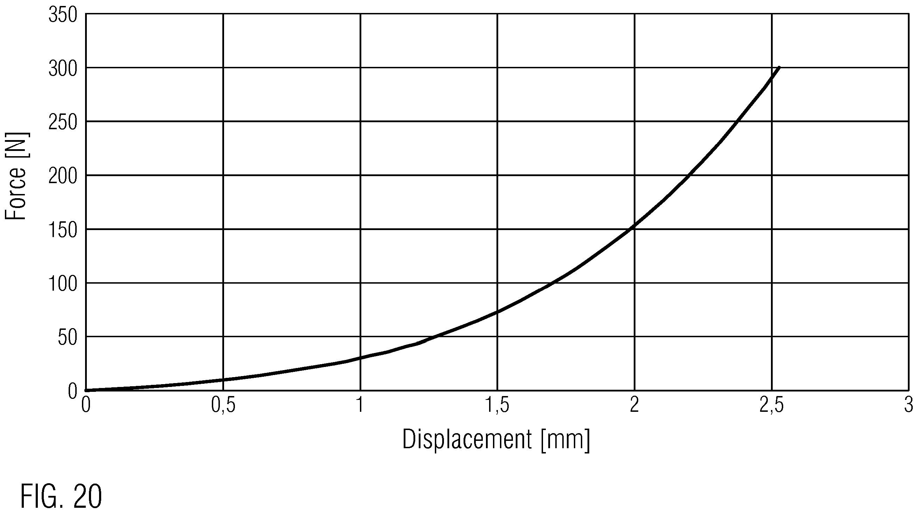

Fig. 20 shows a graph representing the force applied and the resulting displacement of the socket due to compression of the damper ring. It should be noted that the graph of Fig. 20 is simplified in that it shows a single curve. Due to inertial effects in the assembly the curve following the displacement when force applied to the assembly does not coincide with the return curve when the displaced socket is moved back by the elastic force of the compressed damper ring, but there is a slide hysteresis between the curves.

The general desired characteristics of the force/displacement curve which are resulting from the design of the damper ring in the cable end connector assembly are the following. To let the cable end connector assembly return to the centered state after displacement of the socket the assembly should come back from 80 N from more than 1 mm displacement with zero force assistance from the driver. This self-centering return behavior is mainly caused by the lateral sectors 24 which have a large contact area with the socket so that the major portion of the material of the lateral sector takes part in the compression from the very beginning of the displacement and provides an elastic return force to the rest state.

The second aspect is that the driver should experience a good feeling when applying force during the synchronization phase from 0 N to 140 N with stiffness in the range between 0.013 mm/N and 0,015 mm/N.

The third aspect is the end of stroke quality. Upon force application from 0 N to 300 N a target stiffness of about 0.003 mm/N is desired.

The latter two aspects of the force versus displacement behavior are largely influenced by the longitudinal sectors 22 of the damper ring which at the very beginning of the force application and displacement only have a small contribution to the resistance force but contribute more and more to the return force the more the socket is displaced and the more damper material in the longitudinal sectors is compressed.

Finally, a force independent displacement limitation is provided by the projections of the cage ring which act as stoppers for the socket at the predetermined maximal displacement.

## Claims

1. Cable end fitting assembly for connecting a cable to a ball pin, the cable end fitting assembly comprising a terminal rod (2) adapted to be connected to an end portion of a cable and a ball bearing (4) adapted to receive a ball of a ball pin to form a ball joint, the cable end fitting assembly further comprising a socket (10) in the form of a bushing in which the ball bearing (4) is accommodated; an elastic damper ring (20) embracing the socket (10); and a cage ring (40) embracing and holding the damper ring (20) with the socket (10) therein, which cage ring (40) is connected to the terminal rod (2), wherein the damper ring (20) is composed of two symmetrical longitudinal sectors (22) symmetrically opposing each other in longitudinal direction of the terminal rod (2) and two symmetrical lateral sectors (24) symmetrically opposing each other in lateral direction perpendicular to the longitudinal direction, wherein the distribution of elastomeric material in the longitudinal sectors (22) is not uniform and the amount of material compressed is increasing at larger displacements in longitudinal direction to provide increasing resistance force, wherein the damper ring (20) is shaped such that in each of the two lateral sectors (24) the damper ring contacts the socket (10) in axial direction over the maximal axial extension of the damper ring, and such that, in a rest state when no force is exerted by the cage ring (40) on the damper ring (20), each of the longitudinal sectors (22) is in contact with the socket (10) with a minimal axial extension surface and that the axial extension of damper material is increasing with increasing radial distance from the center of the damper ring from the minimal axial extension to the maximal axial extension of the damper ring such that from the beginning of any longitudinal displacement the more the socket (10) is displaced towards the respective longitudinal sector (22) the more damper material is compressed and the higher is the resistance force, **characterized in that** in each of the lateral sectors (24) a lateral groove (26) is formed in the inner wall of the damper ring which lateral groove extends in a direction parallel to the axial direction of the damper ring and which divides each lateral sector (24) in longitudinal direction in a forward and a rearward portion.

2. Cable end fitting assembly according to claim 1, **characterized in that** in each of the lateral sectors (24) the inner walls of the forward and rearward portions have an inner radius to the center of the damper ring (20) that is smaller than the radius of the outer wall of socket (10) such that the forward and rearward portions of each lateral sector (24) are in a compressed state when the socket (10) is in a mounted state in the damper ring (20).

3. Cable end fitting assembly according to any preceding claim, **characterized in that** in each connecting area of adjacent longitudinal and lateral sectors (22, 24) a groove (28) is formed in the inner wall of the damper ring (20), which grooves (28) extend parallel to the axial direction of the damper ring (20) over the entire axial extension thereof.

4. Cable end fitting assembly according to any preceding claim, **characterized in that** the inner wall of the cage ring (40) is provided with projections (42) arranged to extend into openings (30) in the damper ring (20), which projections are arranged and dimensioned to act as stoppers to limit the displacement of the socket (10) with respect to the cage ring upon compression of the damper ring to a predetermined maximal displacement.

5. Cable end fitting assembly according to claim 3 and 4, **characterized in that** the inner wall of the cage ring (40) is provided with four projections (42) arranged to extend through openings (30) in the damper ring (20) into the grooves (28) in the connecting areas of adjacent lateral and longitudinal sectors (22, 24) of the damper ring (20), which projections (42) are arranged and dimensioned act as stoppers to limit the displacement of the socket (10) to the predetermined maximal displacement.

6. Cable end fitting assembly according to any of the preceding claims, **characterized in that** the socket (10) is closed at one of its ends by a cover (8) having a radially outwardly extending peripheral flange (9), and that the socket (10) at its opposite end is provided with a radially outwardly extending peripheral flange (12) which flanges (9, 12) are adapted to cover the gap between socket (10) and cage ring to prevent, upon displacement of the socket (10) in longitudinal direction, when force is applied, that compressed damper material is displaced from the gap between the socket (10) and the cage ring (40).

7. Cable end fitting assembly according to any of the preceding claims, **characterized in that** each longitudinal sector (22) has, in cross section taken at a plane perpendicular to the lateral direction, a wedge-shaped portion widening from the minimal axial extension to the maximal axial extension of the damper ring.

8. Cable end fitting assembly according to any of the preceding claims, **characterized in that** the elastomeric material and shape of the damper ring (20) are arranged such that the force versus displacement curve of the socket has a low slope first portion for small displacements, but provides sufficient return force of at least 80 N on return for displacements lager than 1.6 mm without driver assistance to be self-centering.

9. Cable end fitting assembly according to claim 8, **characterized in that** the elastomeric material and the shape of the damper ring (20) are arranged such that, when force is applied, the slope of the force versus displacement curve is increasing in a second portion to reach at least 140 N at displacements in the range between 1.8 and 2.1 mm corresponding to a stiffness between 0.013 mm/N and 0.015 mm/N.

10. Cable end fitting assembly according to claim 9, **characterized in that** the elastomeric material and the shape of the damper ring (20) are arranged such that the slope of the force versus displacement curve is, when force is applied, further increasing in a third portion following the second portion to reach a stiffness of about 0.003 mm/N in the force interval between 140 N and 300 N.

11. Cable end fitting assembly according to claim 4 or 5 and 10, **characterized in that** the elastomeric material and the shape of the damper ring (20) are arranged such that the maximal resistance force of about 300 N is reached at the maximal displacement of the socket (10) determined by the projections (42) of the cage ring (40) limiting the displacement of the socket (10) to the predetermined maximal displacement.

12. Cable end fitting assembly according to claim 11, **characterized in that** the projections (42) of the cage ring (40) are arranged such the predetermined maximal displacement of the socket is 2.6 mm.

## Patentansprüche

1. Betätigungszug-Endstückaufbau zum Verbinden eines Betätigungszuges mit einem Kugelbolzen, wobei der Betätigungszug-Endstückaufbau einen Endstab (2), der dazu ausgestaltet ist, um mit einem Endbereich eines Betätigungszuges verbunden zu werden, und ein Kugellager (4) aufweist, das dazu ausgestaltet ist, um eine Kugel eines Kugelbolzens aufzunehmen, um ein Kugelgelenk zu bilden, wobei der Betätigungszug-Endstückaufbau weiter eine Fassung (10) in Form einer Buchse, in der das Kugellager (4) untergebracht ist, einen elastischen Dämpfungsring (20), der die Fassung (10) einfasst, und einen Käfigring (40) aufweist, der den Dämpfungsring (20) mit der Fassung (10) darin umfasst und hält, wobei der Dämpfungsring (20) zusammengesetzt ist aus zwei symmetrischen Längssektoren (22), die einander in Längsrichtung des Endstabs (2) symmetrisch gegenüberliegen, und zwei symmetrische Seitensektoren (24), die einander in Querrichtung senkrecht zu der Längsrichtung symmetrisch gegenüberliegen, wobei die Verteilung von elastischem Material in den Längssektoren (22) nicht gleichmäßig ist und die Menge an komprimiertem Material bei größeren Verschiebungen in Längsrichtung ansteigt, um eine ansteigende Widerstandskraft bereitzustellen, wobei der Dämpfungsring (20) so geformt ist, dass der Dämpfungsring in jedem der beiden Seitensektoren (24) die Fassung (10) in axialer Richtung über die maximale axiale Ausdehnung des Dämpfungsrings kontaktiert und dass, in einem Ruhezustand, wenn durch den Käfigring (40) keine Kraft auf den Dämpfungsring (20) ausgeübt wird, jeder der Längssektoren (22) mit einer minimalen axialen Ausdehnungsoberfläche in Kontakt mit der Fassung (10) ist und dass die axiale Ausdehnung von Dämpfungsmaterial mit wachsendem radialen Abstand vom Zentrum des Dämpfungsrings von der minimalen axialen Ausdehnung bis zur maximalen axialen Ausdehnung des Dämpfungsrings anwächst, so dass von Beginn jeder Längsverschiebung an desto mehr Dämpfungsmaterial komprimiert wird und eine desto größere Widerstandskraft erzeugt wird, je mehr die Fassung (10) zu dem jeweiligen Längssektor (22) verschoben wird, **dadurch gekennzeichnet, dass** in jedem der Seitensektoren (24) eine Seitennut (26) in der Innenwand des Dämpfungsrings gebildet ist, wobei die Seitennut in einer Richtung parallel zur axialen Richtung des Dämpfungsrings verläuft und wobei die Seitennut jeden Seitensektor (24) in Längsrichtung in einen vorderen und einen hinteren Bereich teilt.

2. Betätigungszug-Endstückaufbau nach Anspruch 1, **dadurch gekennzeichnet, dass** in jedem der Seitensektoren (24) die Innenwände der vorderen und hinteren Bereiche einen Innenradius zum Zentrum des Dämpfungsrings (20) haben, der kleiner als der Radius der Außenwand der Fassung (10) ist, so dass die vorderen und hinteren Bereiche jedes Seitensektors (24) in einem komprimierten Zustand sind, wenn die Fassung (10) sich in einem eingebauten Zustand in dem Dämpfungsring (20) befindet.

3. Betätigungszug-Endstückaufbau nach einem der vorhergehenden Ansprüche, **dadurch gekennzeichnet, dass** in jedem Verbindungsgebiet von benachbarten Längs- und Seitensektoren (22, 24) eine Nut (28) in der Innenwand des Dämpfungsrings (20) gebildet ist, wobei die Nuten (28) parallel zur axialen Richtung des Dämpfungsrings (20) über dessen gesamte axiale Ausdehnung verlaufen.

4. Betätigungszug-Endstückaufbau nach einem der vorherigen Ansprüche, **dadurch gekennzeichnet, dass** die Innenwand das Käfigrings (40) mit Vorsprüngen (42) versehen ist, die dazu ausgebildet sind, um in Öffnungen (30) des Dämpfungsrings (20) hinein zu reichen, wobei die Vorsprünge so angeordnet und dimensioniert sind, um als Stopper die Verschiebung der Fassung (10) in Bezug auf den Käfigring bei der Kompression des Dämpfungsrings auf eine vorgegebene maximale Verschiebung zu begrenzen.

5. Betätigungszug-Endstückaufbau nach Anspruch 3 und 4, **dadurch gekennzeichnet, dass** die Innenwand des Käfigrings (40) mit vier Vorsprüngen (42) versehen ist, die dazu ausgebildet sind, um durch Öffnungen (30) in dem Dämpfungsring (20) hindurch in die Nuten (28) in den Verbindungsgebieten von benachbarten Seiten- und Längssektoren (22, 24) des Dämpfungsrings (20) zu reichen, wobei die Vorsprünge (42) so angeordnet und bemessen sind, um als Stopper zu wirken, um die Verschiebung der Fassung (10) auf die vorgegebene maximale Verschiebung zu begrenzen.

6. Betätigungszug-Endstückaufbau nach einem der vorhergehenden Ansprüche, **dadurch gekennzeichnet, dass** die Fassung (10) an einem ihrer Enden durch eine Abdeckung (8) geschlossen ist, die einen radial nach außen verlaufenden Umfangsflansch (9) hat, und dass die Fassung (10) an ihrem gegenüberliegenden Ende mit einem radial nach außen verlaufenden Umfangsflansch (12) versehen ist, wobei die Flansche (9, 12) dazu ausgestaltet sind, um die Lücke zwischen der Fassung (10) und dem Käfigring abzudecken, um bei Verschiebung der Fassung (10) in Längsrichtung, wenn Kraft angewendet wird, zu verhindern, dass komprimiertes Dämpfungsmaterial aus der Lücke zwischen der Fassung (10) und dem Käfigring (40) heraus verdrängt wird.

7. Betätigungszug-Endstückaufbau nach einem der vorhergehenden Ansprüche, **dadurch gekennzeichnet, dass** jeder Längssektor (22) im Querschnitt, der in einer Ebene, die quer zur Längsrichtung liegt, genommen ist, einen keilförmigen Bereich hat, der sich von der minimalen axialen Ausdehnung zur maximalen axialen Ausdehnung des Dämpfungsrings aufweitet.

8. Betätigungszug-Endstückaufbau nach einem der vorhergehenden Ansprüche, **dadurch gekennzeichnet, dass** das elastische Material und die Form des Dämpfungsrings (20) dazu eingerichtet sind, so dass die Kurve von Kraft gegen Verschiebung der Fassung einen ersten Bereich mit niedriger Steigung für kleine Verschiebungen hat, aber ausreichend Rückstellkraft von wenigstens 80 N zur Rückkehr für Verschiebungen von mehr als 1,6 mm ohne Fahrerunterstützung liefert, um selbstzentrierend zu sein.

9. Betätigungszug-Endstückaufbau nach Anspruch 8, **dadurch gekennzeichnet, dass** das Elastomermaterial und die Form des Dämpfungsrings (20) dazu eingerichtet sind, so dass, wenn Kraft angewendet wird, die Steigung der Kurve von Kraft gegen Verschiebung in einem zweiten Bereich ansteigt, um wenigstens 140 N bei Verschiebungen im Bereich zwischen 1,8 und 2,1 mm entsprechend einer Steifigkeit zwischen 0,013 mm/N und 0,015 mm/N zu erreichen.

10. Betätigungszug-Endstückaufbau nach Anspruch 9, **dadurch gekennzeichnet, dass** das elastische Material und die Form des Dämpfungsrings (20) dazu eingerichtet sind, so dass die Steigung der Kurve Kraft gegen Verschiebung bei Kraftanwendung in einem dritten, auf den zweiten Bereich folgenden Bereich weiter ansteigt, um eine Steifigkeit von etwa 0,003 mm/N in dem Kraftintervall zwischen 140 N und 300 N zu erreichen.

11. Betätigungszug-Endstückaufbau nach Anspruch 4 oder 5 und 10, **dadurch gekennzeichnet, dass** das elastische Material und die Form des Dämpfungsrings (20) dazu eingerichtet sind, so dass die maximale Widerstandskraft von etwa 300 N bei der maximalen Verschiebung der Fassung erreicht wird, die durch die Vorsprünge (42) des Käfigrings bestimmt ist, die die Verschiebung der Fassung (10) auf die vorgegebene maximale Verschiebung begrenzen.

12. Betätigungszug-Endstückaufbau nach Anspruch 11, **dadurch gekennzeichnet, dass** die Vorsprünge (42) des Käfigrings (40) so ausgestaltet sind, dass die vorgegebene maximale Verschiebung der Fassung 2,6 mm beträgt.

## Revendications

1. Ensemble raccord d'extrémité de câble pour le raccordement d'un câble à une broche à bille, l'ensemble raccord d'extrémité de câble comprenant une tige terminale (2) adaptée pour être raccordée à une portion d'extrémité d'un câble et un roulement à billes (4) adapté pour recevoir une bille d'une broche à bille pour former un joint à bille, l'ensemble raccord d'extrémité de câble comprenant en outre une douille (10) sous la forme d'une bague, dans laquelle le roulement à billes (4) est logé ; une bague d'amortissement élastique (20) entourant la douille (10) ; et une bague de cage (40) entourant et maintenant la bague d'amortissement (20) avec la douille (10) dans celle-ci, laquelle bague de cage (40) est raccordée à la tige terminale (2), dans lequel la bague d'amortissement (20) est composée de deux secteurs longitudinaux symétriques (22) opposés de manière symétrique l'un à l'autre dans la direction longitudinale de la tige terminale (2) et de deux secteurs latéraux symétriques (24) opposés de manière symétrique l'un à l'autre dans la direction latérale perpendiculaire à la direction longitudinale, dans lequel la distribution de matériau élastomère dans les secteurs longitudinaux (22) n'est pas uniforme et la quantité de matériau compressé augmente lorsque les déplacements sont plus importants dans la direction longitudinale pour fournir une force de résistance croissante, dans lequel la bague d'amortissement (20) est formée de sorte que dans chacun des deux secteurs latéraux (24) la bague d'amortissement touche la douille (10) dans la direction axiale sur l'extension axiale maximale de la bague d'amortissement, et de sorte que dans un état de repos lorsqu'aucune force n'est exercée par la bague de cage (40) sur la bague d'amortissement (20), chacun des secteurs longitudinaux (22) soit en contact avec la douille (10) avec une surface d'extension axiale minimale et que l'extension axiale de matériau d'amortissement augmente lorsque la distance radiale croît du centre de la bague d'amortissement à partir de l'extension axiale minimale à l'extension axiale maximale de la bague d'amortissement de sorte que dès le début de tout déplacement longitudinal plus la douille (10) est déplacée vers le secteur longitudinal (22) respectif, plus le matériau d'amortissement est compressé et plus élevée est la force de résistance, **caractérisé en ce que** dans chacun des secteurs latéraux (24) une rainure latérale (26) est formée dans la paroi intérieure de la bague d'amortissement, laquelle rainure latérale s'étend dans une direction parallèle à la direction axiale de la bague d'amortissement et laquelle divise chaque secteur latéral (24) dans la direction longitudinale dans une portion vers l'avant et une portion vers l'arrière.

2. Ensemble raccord d'extrémité de câble selon la revendication 1, **caractérisé en ce que** dans chacun des secteurs latéraux (24) les parois intérieures des portions vers l'avant et vers l'arrière présentent un rayon intérieur au centre de la bague d'amortissement (20) qui est inférieur au rayon de la paroi extérieure de douille (10) de sorte que les portions vers l'avant et vers l'arrière de chaque secteur latéral (24) soient dans un état compressé lorsque la douille (10) est dans un état monté dans la bague d'amortissement (20).

3. Ensemble raccord d'extrémité de câble selon l'une quelconque des revendications, **caractérisé en ce que** dans chaque zone de raccordement de secteurs longitudinaux et latéraux adjacents (22, 24), une rainure (28) est formée dans la paroi intérieure de la bague d'amortissement (20), lesquelles rainures (28) s'étendent parallèlement à la direction axiale de la bague d'amortissement (20) sur l'extension axiale entière de celle-ci.

4. Ensemble raccord d'extrémité de câble selon l'une quelconque des revendications précédentes, **caractérisé en ce que** la paroi intérieure de la bague de cage (40) est dotée de saillies (42) agencées pour s'étendre dans des ouvertures (30) dans la bague d'amortissement (20), lesquelles saillies sont agencées et dimensionnées pour agir comme butées pour limiter le déplacement de la douille (10) par rapport à la bague de cage suite à la compression de la bague d'amortissement à un déplacement maximal prédéterminé.

5. Ensemble raccord d'extrémité de câble selon la revendication 3 et 4, **caractérisé en ce que** la paroi intérieure de la bague de cage (40) est dotée de quatre saillies (42) agencées pour s'étendre à travers des ouvertures (30) dans la bague d'amortissement (20) dans les rainures (28) dans les zones de raccordement de secteurs latéraux et longitudinaux adjacents (22, 24) de la bague d'amortissement (20), lesquelles saillies (42) sont agencées et dimensionnées pour agir comme butées pour limiter le déplacement de la douille (10) au déplacement maximal prédéterminé.

6. Ensemble raccord d'extrémité de câble selon l'une quelconque des revendications précédentes, **caractérisé en ce que** la douille (10) est fermée à une de ses extrémités par un couvercle (8) présentant une bride périphérique (9) s'étendant radialement vers l'extérieur, et que la douille (10) à son extrémité opposée est dotée d'une bride périphérique s'étendant radialement vers l'extérieur (12), lesquelles brides (9, 12) sont adaptées pour couvrir la fente entre la douille (10) et la bague de cage pour empêcher, suite au déplacement de la douille (10) dans la direction longitudinale, lorsque la force est appliquée, que du matériau d'amortissement compressé soit déplacé depuis la fente entre la douille (10) et la bague de cage (40).

7. Ensemble raccord d'extrémité de câble selon l'une quelconque des revendications précédentes, **caractérisé en ce que** chaque secteur longitudinal (22) présente, en section transversale prise au niveau d'un plan perpendiculaire à la direction latérale, une portion en forme de coin s'élargissant de l'extension axiale minimale à l'extension axiale maximale de la bague d'amortissement.

8. Ensemble raccord d'extrémité de câble selon l'une quelconque des revendications précédentes, **caractérisé en ce que** le matériau élastomère et la forme de la bague d'amortissement (20) sont agencés de sorte que la courbe force versus déplacement de la douille présente une première portion à faible pente pour de petits déplacements, mais fournit un force de retour suffisante d'au moins 80 N sur le retour pour des déplacements plus en retrait que 1,6 mm sans que l'assistance au conducteur ne doive être autocentrée.

9. Ensemble raccord d'extrémité de câble selon la revendication 8, **caractérisé en ce que** le matériau élastomère et la forme de la bague d'amortissement (20) sont agencés de sorte que, lorsque la force est appliquée, la pente de la courbe force versus déplacement augmente dans une deuxième portion pour atteindre au moins 140 N aux déplacements dans la plage entre 1,8 et 2,1 mm correspondant à une rigidité entre 0,013 mm/N et 0,015 mm/N.

10. Ensemble raccord d'extrémité de câble selon la revendication 9, **caractérisé en ce que** le matériau élastomère et la forme de la bague d'amortissement (20) sont agencés de sorte que la pente de la courbe force versus déplacement augmente, lorsque la force est appliquée, en outre dans une troisième portion suivant la deuxième portion pour atteindre une rigidité d'environ 0,003 mm/N dans l'intervalle de force entre 140 N et 300 N.

11. Ensemble raccord d'extrémité de câble selon la revendication 4 ou 5 et 10, **caractérisé en ce que** le matériau élastomère et la forme de la bague d'amortissement (20) sont agencés de sorte que la force de résistance maximale d'environ 300 N soit atteinte au déplacement maximal de la douille (10) déterminé par les saillies (42) de la bague de cage (40) limitant le déplacement de la douille (10) au déplacement maximal prédéterminé.

12. Ensemble raccord d'extrémité de câble selon la revendication 11, **caractérisé en ce que** les saillies (42) de la bague de cage (40) sont agencées de sorte que le déplacement maximal prédéterminé de la douille soit de 2,6 mm.
